(19) Europäisches Patentamt
European Patent Office
Office européen des brevets

(11) **EP 3 858 470 B1**

(12) **EUROPEAN PATENT SPECIFICATION**

(45) Date of publication and mention
of the grant of the patent:
**22.01.2025  Bulletin 2025/04**

(21) Application number: **20382065.9**

(22) Date of filing: **31.01.2020**

(51) International Patent Classification (IPC):
**B01D 63/10** *(2006.01)*

(52) Cooperative Patent Classification (CPC):
**B01D 63/10;** B01D 2313/02; B01D 2313/041;
B01D 2313/06; B01D 2313/20; B01D 2313/21;
B01D 2313/56; B01D 2315/06

(54) **MEMBRANE ARRANGEMENT AND CORRESPONDING ASSEMBLY METHOD**

MEMBRANANORDNUNG UND ENTSPRECHENDES MONTAGEVERFAHREN

AGENCEMENT DE MEMBRANE ET PROCÉDÉ D'ASSEMBLAGE CORRESPONDANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.08.2021  Bulletin 2021/31**

(73) Proprietors:
• **Universitat de Girona
17004 Girona (ES)**
• **Institut Català de la Recerca de l'Aigua (ICRA)
17003 Girona (ES)**

(72) Inventors:
• **García Pacheco, Raquel
28932 Móstoles (ES)**

• **Comas i Matas, Joaquim
17003 Girona (ES)**
• **Li, Qiyuan
Sidney (AU)**
• **Le Clech, Pierre
Sidney (AU)**

(74) Representative: **Curell Suñol S.L.P.
Muntaner 240, 4o 2a
08021 Barcelona (ES)**

(56) References cited:
**WO-A1-2017/206300      CN-A- 109 574 149
CN-U- 206 652 394      US-A1- 2006 096 908
US-A1- 2011 031 176**

## Description

Field of the invention

The invention relates to a membrane arrangement for treating a fluid according to claim 1.

The invention further relates to a method for assembling a membrane arrangement according to claim 10.

State of the art

Water filtration by reverse osmosis (RO) membrane modules is worldwide the most widespread desalination technology, which helps meeting the current water demand. However, this industrial process still follows the linear economy model and RO membranes are discarded when either the flow rate or the water quality deteriorates.

Efforts have been made for reducing the amount of end-of-life RO membrane modules. These modules are generally disposed in landfills or incinerated. Membrane reuse and recycling to produce second-hand membranes are the main alternative management. Indeed, membrane users are demanding facilities able to produce second-hand membranes with competitive performance and lifespan comparable to the standard manufactured membranes.

Document ES2589151A1 discloses a method for recycling RO membrane modules. However, efficient set up for the recycling process chain and adequate setup for the implementation of the recycled membranes are not available yet. Currently spiral-wound membrane arrangements require a high-pressure resistance and costly membrane vessels within which one or several membrane modules are assembled.

Document EP2271418A1 discloses a membrane arrangement having an outer housing for containing at least one membrane module, two end flanges and four fixing rods. The housing comprises guiding holes for the fixing rods. The two flanges are held together by means of the fixing rods. This arrangement is costly in terms of parts involved and complicated to transport.

Document CN109574149A or CN206652394A disclose a membrane arrangement in which a membrane module is held within one outer housing and two end flanges. The flanges are held together by a plurality of fixing rods. Again, both arrangements are complicated and therefore cost intensive.

Document US 2006/0096908 A1 discloses a device for filtering fluids conveyed at high pressure is easy to service and withstands very high pressures whilst having an appreciably larger filter area than conventional high-pressure filters.

Document WO 2017/206300 A1 discloses a membrane filtration assembly, comprising a shell, a mandrel, a membrane core, a first end cover assembly, a second end cover assembly, a membrane core pretension structure and a raw material fluid input port, and a purification fluid output port.

Document US2009/223891A1 discloses a modular wastewater clarification device that may be positioned external to a septic tank or, alternatively, installed internally within a septic tank chamber to produce sufficiently clean water for lawn and agricultural uses.

Summary of the invention

There is a need for obtaining alternative membrane arrangements, which match the commercial membranes modules: either for the preservation of end-of-life RO membrane modules or the recycled membrane modules with regenerated RO, nanofiltration (NF), ultrafiltration (UF) and microfiltration (MF) performance.

It is thus an object of the invention to provide a membrane arrangement which is less expensive to manufacture, easy to transport, easier to assemble and which provides flexibility of use. This purpose is achieved by a membrane arrangement for treating a fluid according to claim 1.

Indeed, differently to common RO membrane facilities, the arrangement according to the invention requires no pressure vessel, because differently to the solutions known in the art, the own membrane shell assumes the housing function.

The membrane arrangement of the invention provides several advantages which will become apparent below.

Firstly, the arrangement enables to preserve the membrane modules at the water treatment facility when they are replaced. To this end, it is only necessary to assemble the arrangement with a membrane module which has been replaced and fill up the arrangement with a preservation fluid. The arrangement according to the invention enables to preserve the membrane against air. This is a clear advantage compared to the current preservation method, consisting in placing the replaced membrane modules in a preservation pool. This method implies a waste of resources and especially space.

Another application for this kind of membrane arrangement is the recycling process of RO membrane modules. As explained before, there are known membrane module recycling methods such as the one disclosed in document ES2589151A1, incorporated herein by reference. Even though the method has been successfully proved, the environmental costs associated with the method are still remarkable. The method requires a high-volume container in which the membrane modules can be submerged, which in turn demands remarkable amounts of water and chemical products.

Instead, the membrane arrangement of the invention enables the recycling of the membrane module minimizing the quantity of resources required in the process. Now, the membrane module to be recycled needs only to be assembled into the membrane arrangement according to the invention. The arrangement is thus filled up with an etching solution such as a sodium hypochlorite solution. Then the inlet and outlet openings of the membrane are sealed, and the membrane module is exposed to the etching solution during a predetermined time span. As a result, the RO layer of the membrane module is removed and thus recycled NF or UF membranes are obtained. These NF or UF membranes have a permeability greater than that of the discarded membrane and a rejection in divalent salts greater than 30% and less than 30%, respectively. Thanks to the arrangement according to the invention, this process can be put into practice in an economical and more environmentally friendly way.

Yet another application of the membrane arrangement according to the invention is the use of RO recycled membrane modules, or even new NF, UF or MF membrane modules in gravity-driven filtering processes, placing the membrane arrangement submerged in a tank or externally. These processes demand innovative membrane arrangements to be cost efficient and easily transported to the water treatment site. For example, for water treatment applications in underdeveloped countries or isolated areas it is only necessary to provide both inlet and outlet caps, as well as the single elongated connecting members. This simplifies the logistics of the whole procedure. Alternatively, apart from the membrane module, the rest of the parts can be easily manufactured on site. This provides a very economical alternative for reusing old membranes (previously recycled) in areas in which RO plants are already operating. The application of the invention in water treatment systems is especially practical for rural and isolated areas but also for wastewater treatment plants.

Finally, the membrane arrangement according to the invention provides for a solution to put into practice a so-called "low-pressure driven" filtering method. During the development of the invention the arrangement has been proven with pristine RO and recycled NF membranes in crossflow mode. Surprisingly the membrane arrangements withstood pressures up to 7 bar in a successful way.

Therefore, the arrangement of the invention is very flexible, less complex, easier to produce, to assemble and to transport. In particular, the pressure vessel of current membrane arrangements can be avoided, and the arrangement is much simpler. Since the housing of the arrangement is the membrane outer shell of the own membrane module, costs can be remarkably reduced. Furthermore, from a logistic point of view, less parts need to be produced and or transported.

The invention further includes a number of preferred features that are object of the dependent claims and the utility of which will be highlighted hereinafter in the detailed description of an embodiment of the invention.

According to the invention, when seeking for standardization said membrane module further comprises an inlet end flange arranged on said inlet end of said membrane shell, an outlet end flange arranged on said outlet end of said membrane shell, and a permeate collecting duct, said collecting duct extending along said membrane module between said inlet and said outlet end flanges, and being in fluid communication with said membrane shell for collecting said permeate flowing out of said membrane element during the operation of said membrane arrangement and allowing said permeate to flow out through said collecting duct, said inlet cap being sealingly arranged on said inlet end flange of said membrane module and in fluid communication therewith, for introducing said feed stream of influent into said membrane arrangement, and said outlet cap further comprises a second outlet opening, said outlet cap being sealingly arranged on said outlet end flange of said membrane module and in fluid communication therewith, such that said first outlet opening is connected to said permeate collecting duct for allowing a permeate stream to flow out from said membrane module through said at least first outlet opening, while said second outlet opening allows a concentrate stream to flow out from said membrane module.

According to the invention, in order to provide different grades of fluid treatment the membrane element of said membrane module is a spiral-wound membrane element, and the membrane of said membrane element is one of the group consisting in a reverse osmosis membrane, a nanofiltration membrane, an ultrafiltration membrane or a microfiltration membrane.

There is also the need of providing an arrangement which is easy to assemble but which is also reliable in terms of fluid tightness. To this end, in a preferred embodiment the inlet and outlet caps comprise respectively an inner side and an outer side, said inner sides respectively comprise at least one annular recess, said membrane arrangement further comprising an inlet sealing member and an outlet sealing member, and in that said inlet and outlet sealing members are respectively arranged in said annular recesses for providing a sealing engagement with the respective front side of said membrane module.

Also, in order to allow the recycling in an optimum manner it further comprises a first and a second sealing plugs, said first and second sealing plugs being configured to be inserted in a sealing manner respectively in said inlet opening of said inlet cap and in said second outlet opening of said outlet cap. In this way, the etching solution can be introduced in the membrane arrangement without leakages.

In an alternative embodiment conceived for the membrane module preservation the arrangement further comprises a third sealing plug, said third sealing plug being configured to be inserted in a sealing manner in said first outlet opening of said outlet cap.

There is also the need of providing an arrangement which is easy to assemble but which is also reliable in terms of fluid tightness. To this end, in a preferred embodiment the inlet and outlet caps comprise respectively an inner side and an outer side, said inner sides respectively comprise at least one annular recess, said membrane arrangement further comprising an inlet sealing member and an outlet sealing member, and in that said inlet and outlet sealing members are respectively arranged in said annular recesses for providing a sealing engagement with the respective front side of said membrane module. In other words, the sealing engagement is obtained by compressing the sealing member between the corresponding cap and the front side of the corresponding end flange of the membrane module in the axial direction of the membrane arrangement. This assembly is very easy to carry out because the risk that the sealing member comes out of the annular recess during the mounting process is avoided. Therefore, an excellent sealing performance can be achieved, compared to the case in which the sealing effect is achieved in the radial direction of the membrane shell.

In an embodiment seeking for a robust design, said elongated connecting members of said plurality of connecting members are rigid.

In another embodiment look for production simplicity the elongated connecting members are longitudinal rods.

Also, preferably the connecting rods are stainless steel rods.

In another embodiment looking for easy transport the elongated connecting members of said plurality of connecting members are flexible under compression and rigid under tension.

Especially preferably the elongated connecting members are fastening straps.

The invention further relates to a method for assembling a membrane arrangement of the type indicating at the beginning further comprising the steps according to claim 10.

In the method according to the invention said membrane module further comprises:

[a] an inlet end flange arranged on said inlet end of said membrane shell,

[b] an outlet end flange arranged on said outlet end of said membrane shell, and

[c] a permeate collecting duct, said collecting duct extending along said membrane module between said inlet and said outlet end flanges, and being in fluid communication with said membrane shell for collecting said permeate flowing out of said membrane element during the operation of said membrane arrangement and allowing said permeate to flow out through said collecting duct,

the method further comprising the steps of

[d] sealingly arranging said inlet cap on said inlet end flange of said membrane module and in fluid communication therewith, for introducing said feed stream of influent into said membrane arrangement and in that

[d] said outlet cap further comprises a second outlet opening, such that said outlet cap is sealingly arranged on said outlet end flange of said membrane module and in fluid communication therewith, such that said first outlet opening is connected to said permeate collecting duct for allowing a permeate stream to flow out from said membrane module through said at least first outlet opening, while said second outlet opening allows a concentrate stream to flow out from said membrane module.

Finally, in a preferred embodiment said inlet and outlet caps comprise respectively an inner side and an outer side, said inner sides respectively comprise at least one annular recess, said membrane arrangement further comprising an inlet sealing member and an outlet sealing member, and in that the method further comprises the step of arranging said inlet and outlet sealing members in said annular recesses for providing a sealing engagement with the respective front side of said membrane module.

Likewise, the invention also includes other features of detail illustrated in the detailed description of an embodiment of the invention and in the accompanying figures.

Brief description of the drawings

Further advantages and features of the invention will become apparent from the following description, in which, without any limiting character, preferred embodiments of the invention are disclosed, with reference to the accompanying drawings in which:

Figure 1, a front view of the membrane arrangement according to the invention.
Figure 2, a side view of the membrane arrangement of Figure 1 from the inlet side.
Figure 3, a schematic front perspective view with a partial cut of a membrane module for a membrane arrangement according to the invention.
Figure 4, a longitudinal section view along plane III-III of the membrane arrangement of Figure 1.
Figure 5, a detail view of area V of Figure 4, corresponding to the outlet side of the membrane arrangement.

Figure 6, an exploded perspective view of the membrane arrangement of Figure 1.

Figure 7, a front view of the membrane arrangement according to the invention for a fluid treatment application.

Figure 8, a front view of the membrane arrangement according to the invention for a membrane module recycling application.

Figure 9, a front view of the membrane arrangement according to the invention for a membrane module preservation application.

Figure 10, a front view of the membrane arrangement according to the invention with an alternative elongated connecting means.

Figure 11, a schematic set up of a system using submerged and external configuration membranes.

Figure 12 shows a diagram on permeability and salt rejection of the NF recycled membrane module arrangement according to the invention submerged in a tank and operating in gravity-driven mode.

Detailed description of embodiments of the invention

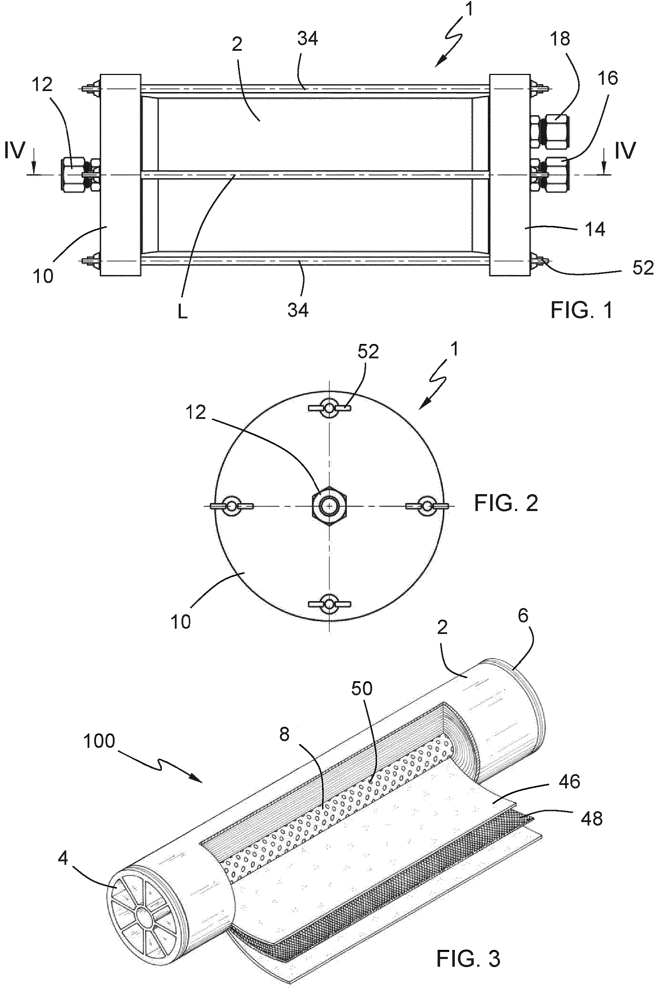

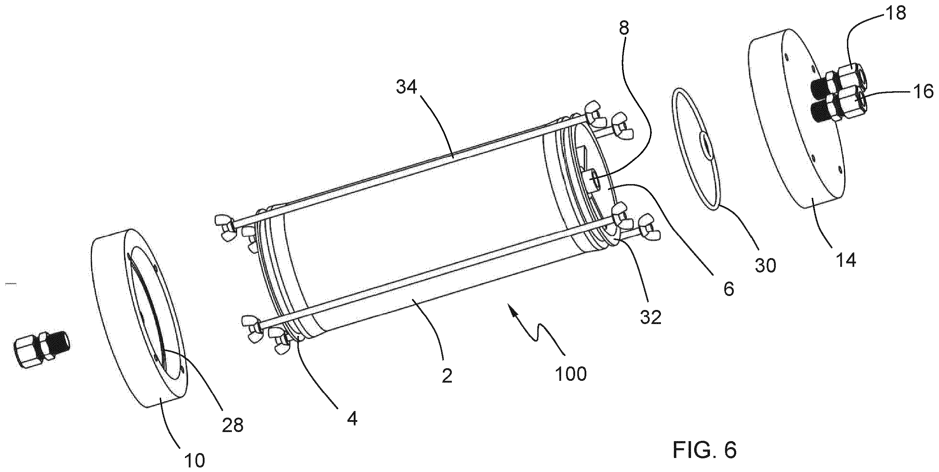

Figures 1 to 6 show a membrane arrangement 1 for treating a fluid according to the invention. The membrane arrangement 1 of the invention is conceived for treatment of a fluid, in particular liquids. Especially preferably the fluid to be treated is water.

The membrane arrangement 1 of the invention comprises a membrane module 100 comprising a glass fibre membrane shell 2. The membrane shell 2 extends in a longitudinal direction L of the module with an inlet end and an outlet end. The membrane module 100 of this example is the model TW30HP-4611 of the company Toray. This exemplary module 100 is a cylindrical module of 28.78 cm length and has a 11.7 cm diameter. However, the invention is not limited to this type of membrane module. As an alternative example, other more widespread membrane modules 100 sizes can also be applied in the invention. The most popular and standard RO membrane modules 10 are 100 cm long and 6 to 40 cm of diameter including a central permeate duct of 1.5 to 3 cm of inner diameter.

Figure 3 shows a schematic constructional example of this kind of membrane modules 100. The membrane module 100 comprises following main parts: an outer membrane shell 2, an inlet end flange 4, and outlet end flange 6 and a permeate collecting duct 8 and a membrane element 20 attached to the latter.

This membrane element 20 is a spiral-wound membrane element 20. The membrane element 20 is made up of a plurality of membrane sheets 46 connected to a permeate duct 8, these membrane sheets 46 being separated by a laminar web like channel spacer 48. The membrane element 20 applicable to the membrane arrangement 1 of the invention is one of the group consisting in a RO membrane, a NF membrane, an UF membrane or a MF membrane.

The inlet end flange 4 is arranged on the inlet end of the membrane shell 2, while the outlet end flange 6 is arranged on the outlet end of the membrane shell 2.

At its turn, the permeate collecting duct 8 extends along the membrane module 100 between said inlet and said outlet end flanges 4, 6. Indeed, the collecting duct 8 protrudes from the centre of the inlet and outlet end flanges 4, 6. The collecting duct 8 comprises a plurality of perforations 50 for being in fluid communication with the membrane shell 2. In Figure 3 the perforations 50 are shown in a larger scale for illustrative purposes. Thanks to the perforations 50 on the collecting duct 8, during the operation of the membrane arrangement 1 in filtration mode, the permeate is collected when it flows from the membrane sheets 46 of the membrane element 20 and the collecting duct 8 allows the permeate to flow out through said collecting duct 8.

The membrane arrangement 1 further comprises an inlet cap 10 and an outlet cap 14. These two parts are preferably made of a plastic material such as polyvinyl chloride (PVC), polyamide 6 (PA6), polyamide 66 (PA66) with glass fibre or polypropylene (PP). This makes these parts economic and easy to produce.

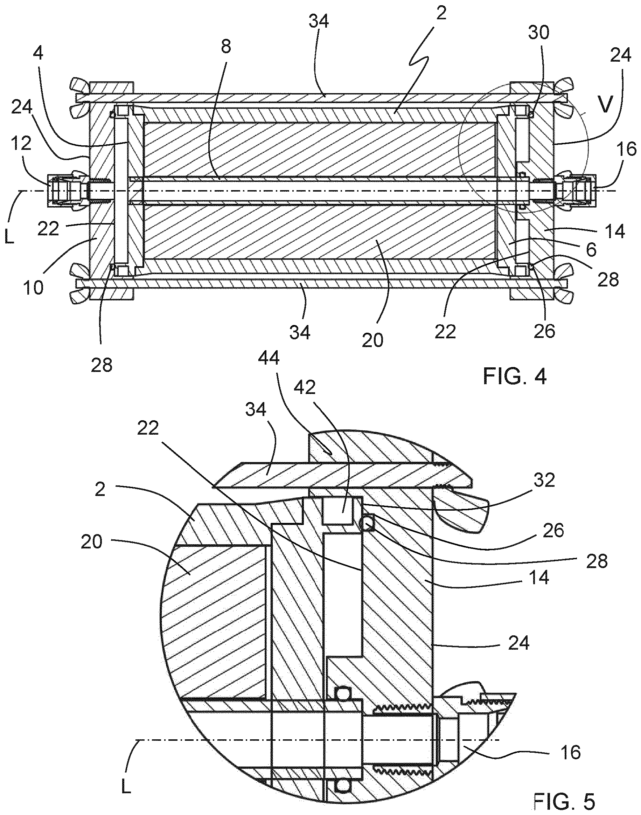

The inlet cap 10 comprises one inlet opening 12. It is arranged in fluid communication with the inlet end of the membrane module 100 for introducing through the inlet opening 12 the feed stream of influent into the membrane arrangement 1. More particularly, in this embodiment the inlet cap 10 is sealingly arranged on the inlet end flange 4 of the membrane module 100. In figure 4, it is apparent that in order to feed the membrane module 100, the inlet cap 10 is in fluid communication with the membrane module 100. Thanks to the fact that the collecting duct 8 is sealed at the inlet end, the influent, after crossing the inlet cap 10, is directed to membrane element 20.

The outlet cap 14 comprises a first outlet opening 16 and a second outlet opening 18, the outlet cap being arranged in fluid communication with the outlet end of the membrane module 100. The first outlet opening 16 is connected to the permeate collecting duct 8 for allowing a permeate stream to flow out from the membrane module 100 through the first outlet opening 16 when the membrane arrangement works in filtration mode. On the other hand, the second outlet opening 18 allows a concentrate stream to flow out from said membrane module 100 in case the membrane needs to be washed. The outlet cap 14 is sealingly arranged on the outlet end flange 6 of the membrane module 100.

The membrane arrangement 1 further comprises four elongated connecting members 34 with fastening means 52 for connecting the inlet and outlet caps 10, 14 together in an assembly position. Preferably, these elongated connecting members are rigid rods, and specially preferably are stainless steel rods. In this case, the fastening means 52 are butterfly hand twist nuts tighten on a threaded section provided at the end of the connecting members 34. Other fastening means are also possible, such as fast tightening clamps, conventional nuts or the like. Also, in an alternative embodiment, for easy logistic transport the elongated connecting members could be in form of tightening straps, such as nylon straps with the corresponding fastening clamps.

Finally, in order to solve the problem of the invention, the inlet and outlet caps 10, 14 are sealingly arranged on the membrane module 100. Furthermore, the membrane arrangement 1 comprises an outer housing that is not an additional part as it is the case of the pressure vessels known in the art. Instead, according to the invention the outer housing is the membrane shell 2. This provides a very simple and economical arrangement, which is easy to produce, transport and assemble.

Furthermore, in order to obtain an effective sealing engagement, the inlet and outlet caps 10, 14 comprise respectively an inner side 22 and an outer side 24. In this embodiment, the inner sides 22 respectively comprise one annular recess 26. Additionally, the membrane arrangement 1 further comprises an inlet sealing member 28 and an outlet sealing member 30. The inlet and outlet sealing members 28, 30 are respectively dimensioned and arranged in the annular recesses 26 for providing the sealing engagement with the respective front side 32 of said membrane module 100. Therefore, the sealing members are in this case a rubber O-ring with circular cross-section working in the axial direction compressed between the corresponding inlet or outlet caps 10, 14 and the inlet and outlet flanges 4, 6.

Alternatively, as it is apparent from Figure 5, it is also conceivable that the sealing members 28, 30 are arranged in a radial annular recess 42. In this case, the sealing engagement would then take place by the radial compression of the sealing members 28, 30 between the inlet and outlet flanges 4, 6 and a cylindrical crown 44 of the corresponding inlet and outlet caps 10, 14.

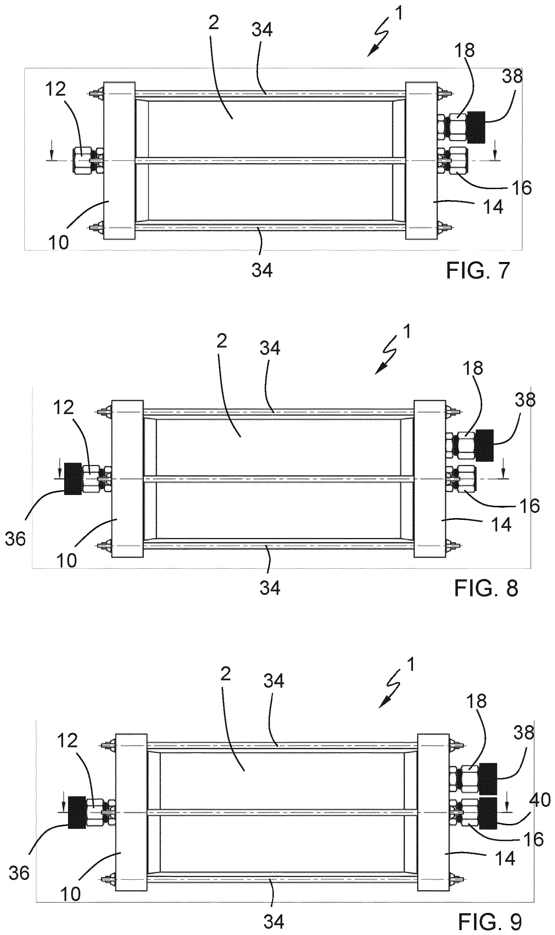

Below, different mounting modes of the membrane arrangement 1 are described, allowing to obtain different operation modes of the membrane arrangement. Regarding the construction details of the embodiments shown in figures 7 to 9, reference is made to the previous description of figures 1 to 6.

Figure 7 shows an embodiment in which the membrane arrangement 1 can be used in gravity-driven filtering mode. To this end, the membrane arrangement comprises a second sealing plug which is configured to be inserted in a sealing manner in the second outlet opening 18 of the outlet cap 14. In this case, the influent is introduced in the membrane arrangement 1 through the inlet opening 12 and after entering the membrane module 100 the permeate flows out the first outlet opening 16.

Figure 8 shows an embodiment in the membrane arrangement 1 for membrane module recycling of any kind. In this case, the membrane arrangement 1 further comprises a first and a second sealing plugs 36, 38. The first and second sealing plugs 36, 38 are configured to be inserted in a sealing manner respectively in the inlet opening 12 of the inlet cap 10 and in the second outlet opening 18 of the outlet cap 14. Initially, only the second sealing plug is inserted. Then the membrane arrangement 1 filled up with an etching solution such as a sodium hypochlorite solution during a predetermined period of time, until the polyamide layer of the spiral-wound membrane has been partially or totally removed and the membrane element 20 has been modified into an NF or UF membrane element, respectively.

Figure 9 shows a third arrangement which, additionally to the already mentioned first and second sealing plugs 36, 38, it further comprises a third sealing plug 40. This third sealing plug 40 is also configured to be inserted in a sealing manner in the first outlet opening 16 of the outlet cap 14. In this case, the arrangement is conceived for membrane preservation and, in particular, for membrane preservation when the membrane element 20 is a RO membrane, NF membrane, an UF membrane or a MF membrane.

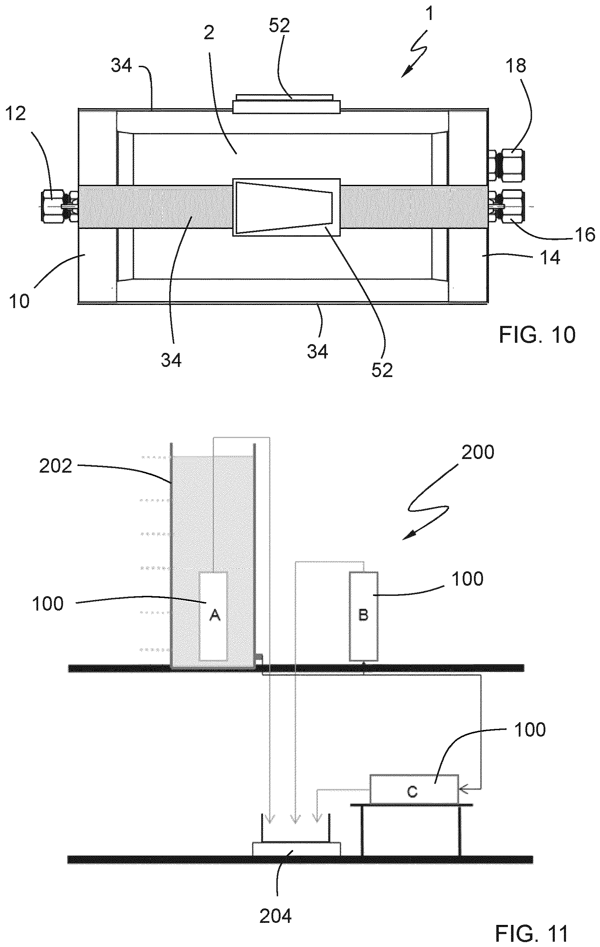

Figure 10 shows an alternative solution for the elongated connecting members. In this case, the elongated connecting members 34 are flexible under compression and rigid under tension, since they are fastening straps comprising a ratchet as fastening means 52. This solution is very practical for emergency applications. The fastening straps are easy to transport and inexpensive.

Below, experimental examples of application of the membrane arrangement 1 of the invention are described.

Example 1: gravity driven membrane arrangement operation

A) Set up of the system

A pilot-scale gravity driven membrane (GDM) system 200 was setup to use the membrane modules 100 in two distinct configurations as shown in Figure 11:

- submerged (by applying initial suction) or
- external (positive head).

Two membrane arrangement 1 orientations were tested: vertical (case A and B), as usually operates gravity-driven systems for household water treatment or horizontal (case C), as usually pressure-driven RO and NF membrane modules 100 operate in the industrial facilities. An 86 cm high feed tank 202 of 20 L capacity was placed at 90 cm from the floor. The room temperature was at 20 ± 1 °C.

The permeate collected during a given period of filtration was weighted in a scale 204 and then recirculated to the feed tank 202 (batch operation). Volume was calculated considering the water density as pure water. Therefore, the membrane permeability (L m$^2$ h$^{-1}$ bar$^{-1}$) was obtained by dividing the permeate flow rate to the membrane element 20 surface area and the transmembrane pressure (TMP). The TMP was estimated considering the height of the water level of the tank 202 and the height of the end of the permeate duct 8.

Temperature, pH and conductivity were continuously recorded from feeding influent and permeate. Additionally, in case of filtering synthetic organic water solutions, influent and permeate water samples were collected for further analysis after 1 and 6 h filtration. Turbidity was measured using an TN-100 turbidity meter of the company Eutech Instruments Pte Ltd. and organic compounds were measured using a duel column liquid chromatography organic carbon detection (LC-OCD), system model, based on the Gräntzel thin film reactor developed by the company DOC Labor, Germany (Huber et al., 2010). Chromatographs were interpreted using DOC Labor ChromCALC 2013 software. For each major component, rejection was calculated with following formula.

$$\%R_i = \left(1 - \frac{C_{pi}}{C_{fi}}\right) \cdot 100$$

where Cf and Cp were the specific concentration measured at the feed and permeate streams, respectively.

B) Gravity membrane system cases studied: focus on NF-like and UF-like membrane modules

In the description of the tests carried out with the membrane arrangement of the invention, NF-like and UF-like membrane modules, refer to membrane modules recycled from a RO membrane module.

During the development of the membrane arrangement following key points were analysed:

B1) Optimal operation membrane setup (submerged vs external).
B2) Address the limitation of the system to separate salts and organic compounds.
B3) Potential operation condition to reduce membrane fouling.
B4) Cleaning procedures.
B5) Producing drinking water.

B1) Optimal operational membrane arrangement 1 setup (submerged vs external).

The membrane arrangement 1 performance was tested filtering MilliQ® water of the company Merck KGaA operating in both configurations: submerged and external. In both cases, it was observed that the use of the inlet and outlet caps 10, 14 prevent air ingress into the membrane arrangement 1. Therefore, the permeability maintained constant at any hydraulic pressure. This is particularly interesting in the submerged configuration when the membrane arrangement 1 was not fully covered by water. Additionally, the highest membrane permeability (see following table 1) was observed when the membrane arrangement 1 operated horizontally out of the water tank and closest to the floor.

**Table 1.** Membrane permeability working out of the tank and placed horizontally.

| Permeability (L m$^{-2}$ h$^{-1}$ bar$^{-1}$) | |
|---|---|
| NF-like | 8.00±0 08 |
| UF-like | 19.32±0.34 |

B2) Address the limitation of the system to separate salts and organic compounds

A synthetic water (simulating river quality) with total organic dissolved carbon lower than 6.5 ppm was used to address the limitation of the system to separate salts and organic compounds. The water solution contained: humic acid, which is a typical model organic foulant widely used; protein (bovine serum albumin, BSA), alginate acid (only for UF-like membrane), which together with divalent cations accelerates fouling; diatomaceous earth, which gives suspended solid (only for UF-like membranes), and salts (400 mg/L NaCl and 80 mg/L MgSO$_4$ at any time).

The membrane arrangement 1 was operating in submerged and external configuration. The main outcomes of these experiments were the following:

- The recycled membrane modules 20 cannot be used for water blending or desalination when filtering in gravity-driven mode. Due to the effect of the concentration polarization (CP), a boundary layer formed near the membrane surface appears when salts are rejected by the membrane element 20 and as water flows through the membrane module 100. In this layer the salt concentration is higher than the salt concentration in the bulk solution. Therefore, ions rejected by the membrane module 100 diffuse back to the bulk due to the concentration gradient. Therefore, a salt rejection coefficient lower than 5% was observed even from RO and NF membranes.

However, recycled membrane modules 20 were able to separate organic compounds. Table 2 shows the rejection coefficients for NF-like and UF-like membrane modules 20.

Table 2: Rejection coefficients observed filtering synthetic water solutions using recycled membranes (n=6).

| Membrane type | DOC | BSA protein | Humic acid | Building blocks | Neutrals compounds |
|---|---|---|---|---|---|
| NF-like | 88.6 $\pm$ 3.2 | 99.4 $\pm$0.5 | 97.2 $\pm$ 3.0 | 84.8 $\pm$11.0 | 77.9 $\pm$5.8 |
| UF-like | 43.5 $\pm$ 20.9 | 99.7$\pm$0.4 | -0.6 $\pm$11.8 | 27.1 $\pm$18.3 | 49.0 $\pm$ 44.3 |

B3) Potential operation condition to reduce membrane fouling

Due to concentration polarization (CP) observed by using the synthetic water solution, two operational filtering mode, continuous filtration and discontinuous filtration, were studied to identify if it is possible to reduce the accumulation of fouling on the membrane element 20 without applying cleaning procedures. The two operating conditions had a duration of filtration time of 6 h. In the case of continuous mode, membrane operated with non-stop filtration. The discontinuous mode consisted in 6 filtering cycles of 1 hour each. From cycle 1 to 5 the membrane arrangement 1 filtration stopped during 40 min, while between cycle 5 and 6 the filtration stopped overnight (12-13 h). After the relaxing time, additional flushing of the feed water (10 L) was applied as a potential practice to reduce the membrane element 20 fouling rate. This methodology was tested in both, submerged and external configuration, observing similar results.

The main outcomes of these experiments were the following:

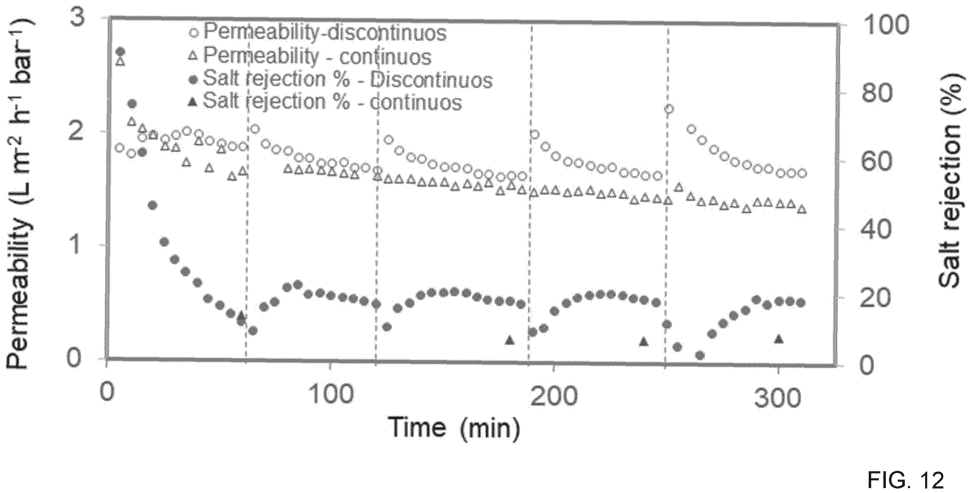

As it is apparent from Figure 12, NF-like membranes: the effect of concentration polarization caused a reduction of permeability and rejection coefficients over time (<10% rejection coefficients after 80 min) when operating in a continuous mode. However, it can be mitigated by the application of flushing after the relaxing time (40 min). Flushing favoured a higher and constant permeability and improved the salt rejection coefficient by approximately 10%. Note that applying flushing is possible thanks to the invention.

UF-like membranes obtained from recycled RO membranes: no concentration polarization effect was observed when treating low organic concentration solutions. Therefore, the permeability slightly decreased during the first hour and then it kept constant. However, the usage of the inlet and outlet caps 10, 14 of the membrane arrangement 1 has a positive impact in terms of:

   i) reducing the ingress of solid material into the membrane.
   ii) reducing fouling accumulation inside the membrane module 100 by applying flushing of the feed solution. In the discontinuous mode a reduction of 40% of the accumulated solids inside the membrane was observed compared to the case of operating at the continuous mode.

B4) Cleaning procedures

The feasibility to apply diverse kind of cleaning procedures was assessed applying:

   i) forward flushing (138 L m$^{-2}$ h$^{-1}$ of water is flushed in same sense than the filtering water sense),
   ii) reverse flushing (138 L m$^{-2}$ h$^{-1}$ of water is flushed from the outlet side to the inlet side),
   iii) backwash (0.43 L m$^{-2}$ h$^{-1}$ feed water passed from the permeate side to the feed) and
   iv) chemically enhanced backwash (CEB) using 5 L of 200 ppm free chlorine was flushed (138 L m$^{-2}$ h$^{-1}$ feed rate).

In all the cases 10L it was used excepting when applying CEB. The water was fed using the same column as the filtering assays, maintaining 0.139 bar of hydraulic pressure. Then, the MilliQ® permeability was evaluated and compared by the initial water value (before filtering the synthetic water, 8.94 $\pm$ 0.1 8 L m$^{-2}$ h$^{-1}$) the membrane permeability lost was calculated according to the following equation:

$$\% \, Permeability \, lost = \frac{P0 - P \, after \, cleaning}{P0} * 100$$

High feed flow was feasible in the case of applying flushing or reverse flushing, while backwashing was possible but in a very low rate. However, in the case of using the system at household level, a low feed flow would be not a disadvantage if the cleaning procedure could be conducted overnight. Table 3 shows the percentage of the permeability lost in case of NF-like membrane. The highest lost was observed after being filtering synthetic water (15.3% of permeability reduction comparing with the MilliQ® permeability before the membrane was filtering organic compounds). The cleaning procedures were carried out following the ascendant sequence (from 1 to 4). In all the cases the cleaning procedures restored the membrane permeability between 90-94%, even after CEB. Therefore, some irreversible fouling remained over the membrane.

**Table 3.** Loss of permeability after filtering synthetic water. MQ permeability before filtering the synthetic water, 8.94 $\pm$ 0.1 8 L m$^{-2}$ h$^{-1}$

| % Permeability lost | |
| --- | --- |
| MilliQ® after synthetic water | 15.3 |
| 1. MilliQ® after 10 L flushing with 10 L MilliQ | 5.2 |
| 2. MilliQ® after reverse flushing 10 L MQ | 9.3 |
| 3. MilliQ® after backwashing 10 L MQ | 8.0 |
| 4. MilliQ® after CEB 5 l (flushing) | 5.1 |

B5) Producing drinking water

The membrane arrangement 1 according to the invention with a UF-like membrane element 20 was set up in a submerged configuration. The membrane arrangement 1 was submerged in a 70 L tank and operated in discontinue mode, refilling 1-2 times the tank per day, for 7 days. The membrane module 100 was maintained in water overnight. The following day, water was flushed using the concentrate stream and renewed with fresh water. Feed water was collected from a fresh shadow well. Water has 6.8 pH, <500 cm/Ms, < 5NTU and around 200 CFU/100 mL of coliforms bacteria. The estimated transmembrane pressure was <0.16 bar.

The main outcomes of the experiments on the membrane arrangement 1 were the following:

- Membrane filtered 300 L of water at a constant flow of 7.5 L/h indicating that the system was not affected by fouling.
- Water quality of permeate improved related to suspended solid and microbiology. None of them were observed.
- The system was easy to set up in a difficult context such as rural areas, or the like with minimum requirement and using local materials such as concrete blocks and the feed tank. It was well-operated by a non-experience volunteer.

Example 2: cross flow pressurized membrane system

A) Set up of the system

A cross flow system (membrane arrangement 1 has an inlet stream through the inlet opening 12 and two outlet streams, through the first and second outlet openings 16, 18: permeate, which is the clean water and concentrate effluent) in a total recycled mode (turning back the permeate to the feed tank) was used.

Gradual increase pressure tests up to 4.4 bar were conducted to assess the material resistance of the inlet and outlet caps 10, 14. The tests were running during 30 min using a spiral-wound NF-like recycled membrane module 100 hosted in the membrane arrangement 1 to filter 2000 ppm MgSO$_4$ solution. At any time, the concentrate and permeate were recirculated to the feed tank. The feed flow was maintained constant at 3 L min$^{-1}$. The room temperature was at 22 $\pm$ 1 °C.

B) Case study: focus on RO and NF-like membranes

The object of the experiment was to test the material resistance under cross flow pressurized condition.

No leaking or cracks were detected after being operating more than 12 h. The membrane performance results at 7 bar transmembrane pressure (TMP) are shown in Table 4. Permeability and rejection coefficients were maintained constant, as was also observed by other authors using recycled membranes hosted in conventional pressure vessels. Contrary to observations working with the arrangement 1 in gravity-driven conditions, NF-recycled membranes can be used for separating salt compounds.

Table 4. Pressure resistance of the inlet and outlet caps 10, 14.

| NF-recycled membrane (20469 ppm h free chlorine exposure dose) | TMP bar | flow L $h^{-1}$ | Permeability L $m^{-2}$ $h^{-1}$ $bar^1$ | Rejection % |
|---|---|---|---|---|
| 2000 ppm MgSO4 solution | 4.4 | 32.86 $\pm$ 3.19 | 3.34 $\pm$ 0.32 | 88.66 $\pm$ 0.42 |

As it has been explained in the previous paragraphs, the membrane arrangement of the invention provides a very reliable, inexpensive and yet simple solution for treating liquids of all kinds and especially for treating water.

**Claims**

1.   A membrane arrangement (1) for treating a fluid comprising:

[a] a membrane module (100) comprising a membrane shell (2) extending in a longitudinal direction (L) with an inlet end and an outlet end, said membrane shell (2) containing a membrane element (20), said membrane element (20) of said membrane module (100) being a spiral-wound membrane element, and the membrane of said membrane element (20) being one of the group consisting in a reverse osmosis membrane, a nanofiltration membrane, an ultrafiltration membrane or a microfiltration membrane,

said membrane module (100) further comprising:

[b] an inlet end flange (4) arranged on said inlet end of said membrane shell (2),
[c] an outlet end flange (6) arranged on said outlet end of said membrane shell (2), and
[d] a permeate collecting duct (8), said collecting duct (8) extending along said membrane module (100) between said inlet and said outlet end flanges (4, 6), and being in fluid communication with said membrane shell (2) for collecting said permeate flowing out of said membrane element (20) during the operation of said membrane arrangement (100) and allowing said permeate to flow out through said collecting duct (8),

the membrane arrangement (1) further comprising:

[e] an inlet cap (10) comprising one inlet opening (12), said inlet cap (10) being arranged in fluid communication with said inlet end of said membrane module (100) for introducing a feed stream of influent into said membrane arrangement (1) through said inlet opening (12),
[f] an outlet cap (14) comprising at least one first outlet opening (16), said outlet cap (14) being arranged in fluid communication with said outlet end of said membrane module (100) for allowing a permeate stream to flow out from said membrane module (100) through said at least one first outlet opening (16),
[g] a plurality of single elongated connecting members (34) with fastening means (52) for connecting said inlet and outlet caps (10, 14) together in an assembly position,
[h] said inlet and outlet caps (10, 14) being sealingly arranged on said membrane module (100),

[i] said inlet cap (10) being sealingly arranged on said inlet end flange (4) of said membrane module (100) and in fluid communication therewith, for introducing said feed stream of influent into said membrane arrangement (1), and
[j] said outlet cap (14) further comprising a second outlet opening (18), said outlet cap (14) being sealingly arranged on said outlet end flange (6) of said membrane module (100) and in fluid communication therewith, such that said first outlet opening (16) is connected to said permeate collecting duct (8) for allowing a permeate stream to flow out from said membrane module (100) through said at least first outlet opening (16), while said second outlet opening (18) allows a concentrate stream to flow out from said membrane module (100),

**characterized in that**
[k] said membrane shell (2) is the outer housing of said membrane arrangement (1).

2.   The membrane arrangement (1) according to claim 1, **characterized in that** said inlet and outlet caps (10, 14)

comprise respectively an inner side (22) and an outer side (24), said inner sides (22) respectively comprise at least one annular recess (26), said membrane arrangement (1) further comprising an inlet sealing member (28) and an outlet sealing member (30), and **in that** said inlet and outlet sealing members (28, 30) are respectively dimensioned and arranged in said annular recesses (26) for providing a sealing engagement with the respective front side (32) of said membrane module (100).

3. The membrane arrangement (1) according to any of claims 1 to 2, **characterized in that** it further comprises a first and a second sealing plugs (36, 38), said first and second sealing plugs (36, 38) being configured to be inserted in a sealing manner respectively in said inlet opening (12) of said inlet cap (10) and in said second outlet opening (18) of said outlet cap (14).

4. The membrane arrangement (1) according to any of claims 2 to 3, **characterized in that** it further comprises a third sealing plug (40), said third sealing plug (40) being configured to be inserted in a sealing manner in said first outlet opening (16) of said outlet cap (14).

5. The membrane arrangement (1) according to any of claims 1 to 4, **characterized in that** said elongated connecting members (34) of said plurality of connecting members (34) are rigid.

6. The membrane arrangement (1) according to claim 5, **characterized in that** said elongated connecting members (34) are longitudinal rods.

7. The membrane arrangement (1) according to any of claims 1 to 4, **characterized in that** said elongated connecting members (34) of said plurality of connecting members (34) are flexible under compression and rigid under tension.

8. The membrane arrangement (1) according to claim 7, **characterized in that** said elongated connecting members (34) are fastening straps.

9. -Method for assembling a membrane arrangement (1) comprising the steps of:

   [a] providing a membrane module (100) comprising a membrane shell (2) extending in a longitudinal direction (L) with an inlet end and an outlet end, said membrane shell (2) containing a membrane element (20), said membrane element (20) of said membrane module (100) being a spiral-wound membrane element, and the membrane of said membrane element (20) being one of the group consisting in a reverse osmosis membrane, a nanofiltration membrane, an ultrafiltration membrane or a microfiltration membrane,

   said membrane module (100) further comprising:

   [b] an inlet end flange (4) arranged on said inlet end of said membrane shell (2),
   [c] an outlet end flange (6) arranged on said outlet end of said membrane shell (2), and
   [d] a permeate collecting duct (8), said collecting duct (8) extending along said membrane module (100) between said inlet and said outlet end flanges (4, 6), and being in fluid communication with said membrane shell (2) for collecting said permeate flowing out of said membrane element (20) during the operation of said membrane arrangement (100) and allowing said permeate to flow out through said collecting duct (8),

   The method further comprising the steps of:

   [e] providing an inlet cap (10) comprising one inlet opening (12),
   [f] arranging said inlet cap (10) in fluid communication with said inlet end of said membrane module (100) for introducing a feed stream of influent into said membrane arrangement (1) through said inlet opening (12),
   [g] providing an outlet cap (14) comprising at least one first outlet opening (16),
   [h] arranging said outlet cap (14) in fluid communication with said outlet end of said membrane module (100) for allowing a permeate stream to flow out from said membrane module (100) through said at least one first outlet opening (16),
   [i] providing a plurality of single elongated connecting members (34), with fastening means (52) for connecting said inlet and outlet caps (10, 14) together in an assembly position,
   [j] connecting said inlet and outlet caps (10, 14) together in an assembly position by means of said single elongated connecting members (34) and fastening means (52), and
   [k] arranging said inlet and outlet caps (10, 14) on said membrane module (100) in a sealing manner,

[l] sealingly arranging said inlet cap (10) on said inlet end flange (4) of said membrane module (100) and in fluid communication therewith, for introducing said feed stream of influent into said membrane arrangement (1),

[m] said outlet cap (14) further comprising a second outlet opening (18), such that said outlet cap (14) is sealingly arranged on said outlet end flange (6) of said membrane module (100) and in fluid communication therewith, such that said first outlet opening (16) is connected to said permeate collecting duct (8) for allowing a permeate stream to flow out from said membrane module (100) through said at least first outlet opening (16), while said second outlet opening (18) allows a concentrate stream to flow out from said membrane module (100),

**characterized in that** it further comprises the steps of:
[o] using said membrane shell (2) as the outer housing of the membrane arrangement (100).

10. The method according to claim 9, **characterized in that** said inlet and outlet caps (10, 14) comprise respectively an inner side (22) and an outer side (24), said inner sides (22) respectively comprise at least one annular recess (26), said membrane arrangement (1) further comprising an inlet sealing member (28) and an outlet sealing member (30), and **in that** the method further comprises the step of arranging said inlet and outlet sealing members (28, 30) in said annular recesses (26) for providing a sealing engagement with the respective front side (32) of said membrane module (100).

11. -Use of a membrane arrangement (1) according to any of claims 1 to 8 in gravity-driven filtering mode.

## Patentansprüche

1. Membrananordnung (1) zum Behandeln eines Fluids, umfassend:

[a] ein Membranmodul (100) umfassend eine sich in einer Längsrichtung (L) erstreckende Membranhülle (2) mit einem Einlassende und einem Auslassende, wobei die Membranhülle (2) ein Membranelement (20) enthält, wobei das Membranelement (20) des Membranmoduls (100) ein spiralförmig gewickeltes Membranelement ist und die Membran des Membranelements (20) eine Membran aus der Gruppe bestehend aus einer Umkehrosmosemembran, einer Nanofiltrationsmembran, einer Ultrafiltrationsmembran oder einer Mikrofiltrationsmembran ist,

wobei das Membranmodul (100) ferner umfasst:

[b] einen Einlassende-Flansch (4), der an dem Einlassende der Membranhülle (2) angeordnet ist;
[c] einen Auslassende-Flansch (6), der an dem Auslassende der Membranhülle (2) angeordnet ist; und
[d] einen Permeatsammelkanal (8), wobei sich der Sammelkanal (8) entlang des Membranmoduls (100) zwischen dem Einlass- und dem Auslassende-Flansch (4, 6) erstreckt und mit der Membranhülle (2) in Fluidverbindung steht, um das Permeat zu sammeln, das während des Betriebs der Membrananordnung (100) aus dem Membranelement (20) fließt, und zu ermöglichen, dass das Permeat durch den Sammelkanal (8) herausfließt,

wobei die Membrananordnung (1) ferner umfasst:

[e] eine Einlasskappe (10) umfassend eine Einlassöffnung (12), wobei die Einlasskappe (10) in Fluidverbindung mit dem Einlassende des Membranmoduls (100) angeordnet ist, um einen Zuführstrom von Zufluss durch die Einlassöffnung (12) in die Membrananordnung (1) einzuleiten;
[f] eine Auslasskappe (14) umfassend mindestens eine erste Auslassöffnung (16), wobei die Auslasskappe (14) in Fluidverbindung mit dem Auslassende des Membranmoduls (100) angeordnet ist, um zu ermöglichen, dass ein Permeatstrom durch die mindestens eine erste Auslassöffnung (16) aus dem Membranmodul (100) herausfließt;
[g] eine Mehrzahl einzelner länglicher Verbindungselemente (34) mit Befestigungsmitteln (52) zum Verbinden der Einlass- und der Auslasskappe (10, 14) miteinander in einer Montageposition,
[h] wobei die Einlass- und die Auslasskappe (10, 14) dichtend auf dem Membranmodul (100) angeordnet sind,
[i] wobei die Einlasskappe (10) dichtend auf dem Einlassende-Flansch (4) des Membranmoduls (100) und in Fluidverbindung damit angeordnet ist, um den Zuführstrom von Zufluss in die Membrananordnung (1) einzuleiten, und

[j] wobei die Auslasskappe (14) ferner eine zweite Auslassöffnung (18) umfasst, wobei die Auslasskappe (14) dichtend auf dem Auslassende-Flansch (6) des Membranmoduls (100) und in Fluidverbindung damit angeordnet ist, derart dass die erste Auslassöffnung (16) mit dem Permeatsammelkanal (8) verbunden ist, um zu ermöglichen, dass ein Permeatstrom durch die mindestens erste Auslassöffnung (16) aus dem Membranmodul (100) herausfließt, während die zweite Auslassöffnung (18) ermöglicht, dass ein Konzentratstrom aus dem Membranmodul (100) herausfließt,
**dadurch gekennzeichnet, dass**
[k] die Membranhülle (2) das äußere Gehäuse der Membrananordnung ist.

2. Membrananordnung (1) nach Anspruch 1, **dadurch gekennzeichnet, dass** die Einlass- und die Auslasskappe (10, 14) jeweils eine Innenseite (22) und eine Außenseite (24) umfassen, wobei die Innenseiten (22) jeweils mindestens eine ringförmige Vertiefung (26) aufweisen, wobei die Membrananordnung (1) ferner ein Einlassdichtungselement (28) und ein Auslassdichtungselement (30) umfassen, und dadurch, dass das Einlass- und das Auslassdichtungselement (28, 30) jeweils dimensioniert und in den ringförmigen Vertiefungen (26) angeordnet sind, um einen Dichtungseingriff mit der jeweiligen Vorderseite (32) des Membranmoduls (100) bereitzustellen.

3. Membrananordnung (1) nach einem der Ansprüche 1 oder 2, **dadurch gekennzeichnet, dass** sie ferner einen ersten und einen zweiten Dichtungsstopfen (36, 38) umfasst, wobei der erste und der zweite Dichtungsstopfen (36, 38) dazu konfiguriert sind, um auf eine abdichtende Weise in die Einlassöffnung (12) der Einlasskappe (10) bzw. in die zweite Auslassöffnung (18) der Auslasskappe (14) eingesetzt zu werden.

4. Membrananordnung (1) nach einem der Ansprüche 2 oder 3, **dadurch gekennzeichnet, dass** sie ferner einen dritten Dichtungsstopfen (40) umfasst, wobei der dritte Dichtungsstopfen (40) dazu konfiguriert ist, um auf eine abdichtende Weise in die erste Auslassöffnung (16) der Auslasskappe (14) eingesetzt zu werden.

5. Membrananordnung (1) nach einem der Ansprüche 1 bis 4, **dadurch gekennzeichnet, dass** die länglichen Verbindungselemente (34) der Mehrzahl von Verbindungselementen (34) starr sind.

6. Membrananordnung (1) nach Anspruch 5, **dadurch gekennzeichnet, dass** die länglichen Verbindungselemente (34) Längsstäbe sind.

7. Membrananordnung (1) nach einem der Ansprüche 1 bis 4, **dadurch gekennzeichnet, dass** die länglichen Verbindungselemente (34) der Mehrzahl von Verbindungselementen (34) unter Druck flexibel und unter Spannung starr sind.

8. Membrananordnung (1) nach Anspruch 7, **dadurch gekennzeichnet, dass** die länglichen Verbindungselemente (34) Befestigungsbänder sind.

9. Verfahren zum Zusammensetzen einer Membrananordnung (1), umfassend die Schritte:

[a] Bereitstellen eines Membranmoduls (100) umfassend eine Membranhülle (2), die sich in einer Längsrichtung (L) erstreckt, mit einem Einlassende und einem Auslassende, wobei die Membranhülle (2) ein Membranelement (20) enthält, wobei das Membranelement (20) des Membranmoduls (100) ein spiralförmig gewickeltes Membranelement ist und die Membran des Membranelements (20) eine Membran aus der Gruppe bestehend aus einer Umkehrosmosemembran, einer Nanofiltrationsmembran, einer Ultrafiltrationsmembran oder einer Mikrofiltrationsmembran ist,

wobei das Membranmodul (100) ferner aufweist:

[b] einen Einlassende-Flansch (4), der an dem Einlassende der Membranhülle (2) angeordnet ist;
[c] einen Auslassende-Flansch (6), der an dem Auslassende der Membranhülle (2) angeordnet ist; und
[d] einen Permeatsammelkanal (8), wobei sich der Sammelkanal (8) entlang des Membranmoduls (100) zwischen dem Einlass- und dem Auslassende-Flansch (4, 6) erstreckt und mit der Membranhülle (2) in Fluidverbindung steht, um das Permeat zu sammeln, das während des Betriebs der Membrananordnung (100) aus dem Membranelement (20) fließt, und um zu ermöglichen, dass das Permeat durch den Sammelkanal (8) herausfließt,

wobei das Verfahren ferner die Schritte umfasst:

[e] Bereitstellen einer Einlasskappe (10) umfassend eine Einlassöffnung (12);

[f] Anordnen der Einlasskappe (10) in Fluidverbindung mit dem Einlassende des Membranmoduls (100) zum Einleiten eines Zuführstroms von Zufluss durch die Einlassöffnung (12) in die Membrananordnung (1);

[g] Bereitstellen einer Auslasskappe (14), die mindestens eine erste Auslassöffnung (16) umfasst;

[h] Anordnen der Auslasskappe (14) in Fluidverbindung mit dem Auslassende des Membranmoduls (100), um zu ermöglichen, dass ein Permeatstrom durch die mindestens eine erste Auslassöffnung (16) aus dem Membranmodul (100) herausfließt;

[i] Bereitstellen einer Mehrzahl einzelner länglicher Verbindungselemente (34) mit Befestigungsmitteln (52) zum Verbinden der Einlass- und der Auslasskappe (10, 14) in einer Montageposition;

[j] Verbinden der Einlass- und der Auslasskappe (10, 14) miteinander in einer Montageposition mittels der einzelnen länglichen Verbindungselemente (34) und der Befestigungsmittel (52); und

[k] Anordnen der Einlass- und der Auslasskappe (10, 14) auf dem Membranmodul (100) auf eine abdichtende Weise,

[l] abdichtendes Anordnen der Einlasskappe (10) auf dem Einlassende-Flansch (4) des Membranmoduls (100) und in Fluidverbindung damit zum Einleiten des Zuführstroms von Zufluss in die Membrananordnung (1),

[m] wobei die Auslasskappe (14) ferner eine zweite Auslassöffnung (18) aufweist, derart dass die Auslasskappe (14) abdichtend auf dem Auslassende-Flansch (6) des Membranmoduls (100) und in Fluidverbindung damit angeordnet ist, derart dass die erste Auslassöffnung (16) mit dem Permeatsammelkanal (8) verbunden ist, um zu ermöglichen, dass ein Permeatstrom durch die mindestens erste Auslassöffnung (16) aus dem Membranmodul (100) herausfließt, während die zweite Auslassöffnung (18) ermöglicht, dass ein Konzentratstrom aus dem Membranmodul (100) herausfließt,

**dadurch gekennzeichnet, dass** es ferner die Schritte umfasst:

[o] Verwenden der Membranhülle (2) als das Außengehäuse der Membrananordnung (100).

10. Verfahren nach Anspruch 9, **dadurch gekennzeichnet, dass**

die Einlass- und die Auslasskappe (10, 14) jeweils eine Innenseite (22) und eine Außenseite (24) umfassen, wobei die Innenseiten (22) jeweils mindestens eine ringförmige Vertiefung (26) umfassen, wobei die Membrananordnung (1) ferner ein Einlassdichtungselement (28) und ein Auslassdichtungselement (30) umfasst; und dadurch, dass das Verfahren ferner den Schritt Anordnen des Einlass- und des Auslassdichtungselements (28, 30) in den ringförmigen Vertiefungen (26), um einen Dichtungseingriff mit der jeweiligen Vorderseite (32) des Membranmoduls (100) bereitzustellen, umfasst.

11. Verwendung einer Membrananordnung (1) nach einem der Ansprüche 1 bis 8 in schwerkraftbetriebenem Filtermodus.

**Revendications**

1. Disposition de membrane (1) pour traiter un fluide comprenant :

[a] un module de membrane (100) comprenant une enveloppe de membrane (2) s'étendant dans une direction longitudinale (L) avec une extrémité d'entrée et une extrémité de sortie, ladite enveloppe de membrane (2) contenant un élément de membrane (20), ledit élément de membrane (20) dudit module de membrane (100) étant un élément de membrane enroulé en spirale, et la membrane dudit élément de membrane (20) étant l'une du groupe constitué par une membrane d'osmose inverse, une membrane de nanofiltration, une membrane d'ultrafiltration ou une membrane de microfiltration,

ledit module de membrane (100) comprenant en outre :

[b] une bride d'extrémité d'entrée (4) agencée sur ladite extrémité d'entrée de ladite enveloppe de membrane (2),

[c] une bride d'extrémité de sortie (6) agencée sur ladite extrémité de sortie de ladite enveloppe de membrane (2), et

[d] un conduit de collecte de perméat (8), ledit conduit de collecte (8) s'étendant le long dudit module de membrane (100) entre lesdites brides d'extrémités d'entrée et de sortie (4, 6), et étant en communication fluidique avec ladite enveloppe de membrane (2) pour collecter ledit perméat s'écoulant hors dudit élément de membrane (20) pendant le fonctionnement de ladite disposition de membrane (100) et permettre audit perméat de s'écouler à travers ledit conduit de collecte (8),

la disposition de membrane (1) comprenant en outre:

[e] un capuchon d'entrée (10) comprenant une ouverture d'entrée (12), ledit capuchon d'entrée (10) étant agencé en communication fluidique avec ladite extrémité d'entrée dudit module de membrane (100) pour introduire un flux d'alimentation d'affluent dans ladite disposition de membrane (1) à travers ladite ouverture d'entrée (12),

[f] un capuchon de sortie (14) comprenant au moins une première ouverture de sortie (16), ledit capuchon de sortie (14) étant agencé en communication fluidique avec ladite extrémité de sortie dudit module de membrane (100) pour permettre à un flux de perméat de s'écouler hors dudit module de membrane (100) à travers ladite au moins une première ouverture de sortie (16),

[g] une pluralité d'éléments de liaison allongés uniques (34) avec des moyens de fixation (52) pour relier lesdits capuchons d'entrée et de sortie (10, 14) ensemble dans une position d'assemblage,

[h] lesdits capuchons d'entrée et de sortie (10, 14) étant agencés de manière étanche sur ledit module de membrane (100),

[i] ledit capuchon d'entrée (10) étant agencé de manière étanche sur ladite bride d'extrémité d'entrée (4) dudit module de membrane (100) et en communication fluidique avec celle-ci, pour introduire ledit flux d'alimentation d'affluent dans ladite disposition de membrane (1), et

[j] ledit capuchon de sortie (14) comprenant en outre une seconde ouverture de sortie (18), ledit capuchon de sortie (14) étant agencé de manière étanche sur ladite bride d'extrémité de sortie (6) dudit module de membrane (100) et en communication fluidique avec celle-ci, de sorte que ladite première ouverture de sortie (16) soit reliée audit conduit de collecte de perméat (8) pour permettre à un flux de perméat de s'écouler hors dudit module de membrane (100) à travers ladite au moins première ouverture de sortie (16), tandis que ladite seconde ouverture de sortie (18) permet à un flux de concentré de s'écouler hors dudit module de membrane (100),

**caractérisé en ce que**

[k] ladite enveloppe de membrane (2) est le boîtier externe de ladite disposition de membrane (1).

2. Disposition de membrane (1) selon la revendication 1, **caractérisée en ce que** lesdits capuchons d'entrée et de sortie (10, 14) comprennent respectivement un côté interne (22) et un côté externe (24), lesdits côtés internes (22) comprennent respectivement au moins un évidement annulaire (26), ladite disposition de membrane (1) comprenant en outre un élément d'étanchéité d'entrée (28) et un élément d'étanchéité de sortie (30), et **en ce que** lesdits éléments d'étanchéité d'entrée et de sortie (28, 30) sont respectivement dimensionnés et agencés dans lesdits évidements annulaires (26) pour fournir un engagement d'étanchéité avec le côté avant (32) respectif dudit module de membrane (100).

3. Disposition de membrane (1) selon l'une des revendications 1 et 2, **caractérisée en ce qu'**il comprend en outre un premier et un deuxième bouchons d'étanchéité (36, 38), lesdits premier et deuxième bouchons d'étanchéité (36, 38) étant configurés pour être insérés de manière étanche respectivement dans ladite ouverture d'entrée (12) dudit capuchon d'entrée (10) et dans ladite seconde ouverture de sortie (18) dudit capuchon de sortie (14).

4. Disposition de membrane (1) selon l'une des revendications 2 et 3, **caractérisée en ce qu'**il comprend en outre un troisième bouchon d'étanchéité (40), ledit troisième bouchon d'étanchéité (40) étant configuré pour être inséré de manière étanche dans ladite première ouverture de sortie (16) dudit capuchon de sortie (14).

5. Disposition de membrane (1) selon l'une des revendications 1 à 4, **caractérisée en ce que** lesdits éléments de liaison allongés (34) de ladite pluralité d'éléments de liaison (34) sont rigides.

6. Disposition de membrane (1) selon la revendication 5, **caractérisée en ce que** lesdits éléments de liaison (34) allongés sont des tiges longitudinales.

7. Disposition de membrane (1) selon l'une des revendications 1 à 4, **caractérisée en ce que** lesdits éléments de liaison (34) allongés de ladite pluralité d'éléments de liaison (34) sont flexibles sous compression et rigides sous tension.

8. Disposition de membrane (1) selon la revendication 7, **caractérisée en ce que** lesdits éléments de liaison (34) allongés sont des sangles de fixation.

9. Procédé d'assemblage d'une disposition de membrane (1) comprenant les étapes :

[a] de fourniture d'un module de membrane (100) comprenant une enveloppe de membrane (2) s'étendant dans une direction longitudinale (L) avec une extrémité d'entrée et une extrémité de sortie, ladite enveloppe de membrane (2) contenant un élément de membrane (20), ledit élément de membrane (20) dudit module de membrane (100) étant un élément de membrane enroulé en spirale, et la membrane dudit élément de membrane (20) étant l'une du groupe constitué par une membrane d'osmose inverse, une membrane de nanofiltration, une membrane d'ultrafiltration ou une membrane de microfiltration,

ledit module de membrane (100) comprenant en outre:

[b] une bride d'extrémité d'entrée (4) agencée sur ladite extrémité d'entrée de ladite enveloppe de membrane (2),
[c] une bride d'extrémité de sortie (6) agencée sur ladite extrémité de sortie de ladite enveloppe de membrane (2), et
[d] un conduit de collecte de perméat (8), ledit conduit de collecte (8) s'étendant le long dudit module de membrane (100) entre lesdites brides d'extrémités d'entrée et de sortie (4, 6), et étant en communication fluidique avec ladite enveloppe de membrane (2) pour collecter ledit perméat s'écoulant hors dudit élément de membrane (20) pendant le fonctionnement de ladite disposition de membrane (100) et permettre audit perméat de s'écouler à travers ledit conduit de collecte (8),

le procédé comprenant en outre les étapes:

[e] de fourniture d'un capuchon d'entrée (10) comprenant une ouverture d'entrée (12),
[f] d'agencement dudit capuchon d'entrée (10) en communication fluidique avec ladite extrémité d'entrée dudit module de membrane (100) pour introduire un flux d'alimentation d'affluent dans ladite disposition de membrane (1) à travers ladite ouverture d'entrée (12),
[g] de fourniture d'un capuchon de sortie (14) comprenant au moins une première ouverture de sortie (16),
[h] d'agencement dudit capuchon de sortie (14) en communication fluidique avec ladite extrémité de sortie dudit module de membrane (100) pour permettre à un flux de perméat de s'écouler hors dudit module de membrane (100) à travers ladite au moins une première ouverture de sortie (16),
[i] de fourniture d'une pluralité d'éléments de liaison (34) allongés uniques, avec des moyens de fixation (52) pour relier lesdits capuchons d'entrée et de sortie (10, 14) ensemble dans une position d'assemblage,
[j] de liaison desdits capuchons d'entrée et de sortie (10, 14) ensemble dans une position d'assemblage au moyen desdits éléments de liaison (34) allongés uniques et desdits moyens de fixation (52), et
[k] d'agencement desdits capuchons d'entrée et de sortie (10, 14) sur ledit module de membrane (100) de manière étanche,

[1] d'agencement étanche dudit capuchon d'entrée (10) sur ladite bride d'extrémité d'entrée (4) dudit module de membrane (100) et en communication fluidique avec celle-ci, pour introduire ledit flux d'alimentation d'affluent dans ladite disposition de membrane (1),
[m] ledit capuchon de sortie (14) comprenant en outre une seconde ouverture de sortie (18), de sorte que ledit capuchon de sortie (14) soit agencé de manière étanche sur ladite bride d'extrémité de sortie (6) dudit module de membrane (100) et en communication fluidique avec celle-ci, de sorte que ladite première ouverture de sortie (16) soit reliée audit conduit de collecte de perméat (8) pour permettre à un flux de perméat de s'écouler hors dudit module de membrane (100) à travers ladite au moins première ouverture de sortie (16), tandis que ladite seconde ouverture de sortie (18) permet à un flux de concentré de s'écouler hors dudit module de membrane (100),

**caractérisé en ce qu'**il comprend en outre les étapes :
[o] d'utilisation de ladite enveloppe de membrane (2) comme étant le boîtier externe de la disposition de membrane (100).

10. Procédé selon la revendication 9, **caractérisé en ce que** lesdits capuchons d'entrée et de sortie (10, 14) comprennent respectivement un côté interne (22) et un côté externe (24), lesdits côtés internes (22) comprennent respectivement au moins un évidement annulaire (26), ladite disposition de membrane (1) comprenant en outre un élément d'étanchéité d'entrée (28) et un élément d'étanchéité de sortie (30), et **en ce que** le procédé comprend en outre l'étape d'agencement desdits éléments d'étanchéité d'entrée et de sortie (28, 30) dans lesdits évidements annulaires (26) pour fournir un engagement d'étanchéité avec le côté avant (32) respectif dudit module de membrane (100).

11. Utilisation d'une disposition de membrane (1) selon l'une des revendications 1 à 8 dans un mode de filtration par

gravité.

FIG. 1

FIG. 2

FIG. 3

FIG. 4

FIG. 5

FIG. 6

FIG. 7

FIG. 8

FIG. 9

FIG. 10

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2589151 A1
- EP 2271418 A1
- CN 109574149 A
- CN 206652394 A
- US 20060096908 A1
- WO 2017206300 A1
- US 2009223891 A1